# EUROPEAN PATENT APPLICATION

(11) **EP 4 768 303 A1**
(43) Date of publication of application: **01.07.2026**
(21) Application number: 25208107.0
(22) Date of filing: 10.10.2025
(51) Int. Cl.: B60L 3/00, B60L 58/20, B60L 58/21

(54) **VEHICLE CONNECTION CIRCUIT AND VEHICLE BATTERY STRUCTURE**

(30) Priority: 26.12.2024 JP 2024231124
(71) Applicant: TOYOTA JIDOSHA KABUSHIKI KAISHA, Toyota-shi, Aichi-ken 471-8571 (JP)
(72) Inventor: SHIMIZU, Yuki, TOYOTA-SHI, AICHI-KEN, 471-8571 (JP)
(74) Representative: Cabinet Beau de Loménie

(57) **Abstract**

A junction block is interposed between a first battery and a second battery, both provided in a vehicle and connectable to each other, and a motor, and is configured to electrically connect the first battery, the second battery, and the motor. The junction block includes a first path for charging the first battery, a second path for charging the second battery, a third path for charging the first battery and the second battery, and a thermistor provided in a portion where the first path, the second path, and the third path overlap.

## Description

### BACKGROUND OF THE INVENTION

### 1. Field of the Invention

The present disclosure relates to vehicle connection circuits and vehicle battery structures.

### 2. Description of Related Art

Japanese Unexamined Patent Application Publication No. 2024-008604 (JP 2024-008604 A) describes a battery radiated sound measurement device. This battery radiated sound measurement device prohibits measurement of radiated sound by a sound sensor when the amount of change per unit time in a temperature index value of a wiring box detected by a temperature sensor is greater than or equal to a threshold, and permits measurement of radiated sound by the sound sensor when the amount of change is less than the threshold.

### SUMMARY OF THE INVENTION

There are cases where a vehicle equipped with a plurality of batteries is provided with a vehicle connection circuit (hereinafter also referred to as "junction block") that is connectable to the batteries. In such a junction block, a temperature sensor may be disposed in order to detect a relay malfunction. In this case, from the viewpoints of cost reduction and structural simplification, it is desirable to dispose a minimum number of temperature sensors. However, depending on the placement of the temperature sensors, it may not be possible to detect a relay malfunction.

An object of the present disclosure is to provide a vehicle connection circuit and a vehicle battery structure that are capable of detecting a relay malfunction using a minimum number of temperature sensors in a vehicle equipped with a plurality of batteries.

A vehicle connection circuit of claim 1 is interposed between a first battery and a second battery, both provided in a vehicle and connectable to each other, and a motor, and is configured to electrically connect the first battery, the second battery, and the motor. The vehicle connection circuit includes: a first path configured to charge the first battery; a second path configured to charge the second battery; a third path configured to charge the first battery and the second battery; and a temperature sensor provided in a portion where the first path, the second path, and the third path overlap.

In the vehicle connection circuit of claim 1, a relay malfunction can be detected with a minimum number of temperature sensors in a vehicle equipped with a plurality of batteries. As used herein, the term "minimum" means that the number of temperature sensors is kept as small as possible. For example, a relay malfunction in any of a plurality of paths can be detected by at least one temperature sensor. Accordingly, the cost can be reduced and the structure can be simplified.

According to a vehicle connection circuit of claim 2, in the vehicle connection circuit of claim 1, a fuse and a relay are provided in a portion where the first path, the second path, and the third path overlap, and the temperature sensor is provided between the fuse and the relay.

In the vehicle connection circuit of claim 2, a relay malfunction in any of a plurality of paths can be detected by a single temperature sensor.

According to a vehicle connection circuit of claim 3, in the vehicle connection circuit of claim 1, a fuse and a relay are provided in a portion where the first path, the second path, and the third path overlap, and the temperature sensor is provided integrally with the relay.

In the vehicle connection circuit of claim 3, the temperature sensor and the relay are integrally provided. This can reduce the installation area and simplify the structure.

According to a vehicle connection circuit of claim 4, in the vehicle connection circuit of claim 1, the temperature sensor is provided in a portion where the first path and the third path overlap and do not overlap the second path, and in a portion where the second path and the third path overlap and do not overlap the first path, instead of in the portion where the first path, the second path, and the third path overlap.

In the vehicle connection circuit of claim 4, a relay malfunction in any of a plurality of paths can be detected by two temperature sensors.

A vehicle battery structure of claim 5 includes: a first battery; and a second battery that is connectable to the first battery; and the vehicle connection circuit of any one of claims 1 to 4 that is interposed between the first battery and the second battery, and the motor, and that is configured to electrically connect the first battery, the second battery, and the motor.

In the vehicle battery structure of claim 5, a relay malfunction can be detected with a minimum number of temperature sensors in a vehicle equipped with a plurality of batteries.

As described above, according to the present disclosure, it is possible to detect a relay malfunction with a minimum number of temperature sensors in a vehicle equipped with a plurality of batteries.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram showing an example of the configuration of a vehicle battery structure mounted on a vehicle according to an embodiment;
FIG. 2 shows an example of a circuit configuration of the vehicle battery structure according to the embodiment;
FIG. 3 shows an example of the circuit configuration of the vehicle battery structure according to the embodiment;
FIG. 4 shows an example of the circuit configuration of the vehicle battery structure according to the embodiment;
FIG. 5 shows another example of the arrangement of a thermistor according to the embodiment; and
FIG. 6 shows a circuit configuration of a vehicle battery structure according to a modification.

### DETAILED DESCRIPTION OF EMBODIMENTS

Hereinafter, an exemplary embodiment for carrying out the technique of the present disclosure will be described in detail with reference to the drawings.

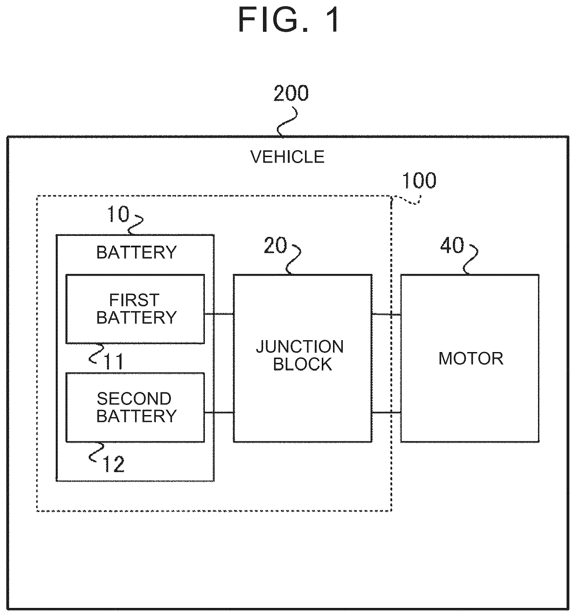

FIG. 1 is a block diagram showing an example of the configuration of a vehicle battery structure 100 mounted on a vehicle 200 according to the embodiment. As shown in FIG. 1, the vehicle 200 according to the present embodiment is equipped with the vehicle battery structure 100 and a motor 40 that drives the vehicle 200. The vehicle battery structure 100 includes a battery 10 and a junction block 20, and the battery 10 includes a first battery 11 and a second battery 12. The first battery 11 and the second battery 12 are connectable to each other. The junction block 20 is an example of a vehicle connection circuit. The junction block 20 is interposed between the first battery 11 and the second battery 12, and the motor 40, and electrically connects the first battery 11, the second battery 12, and the motor 40.

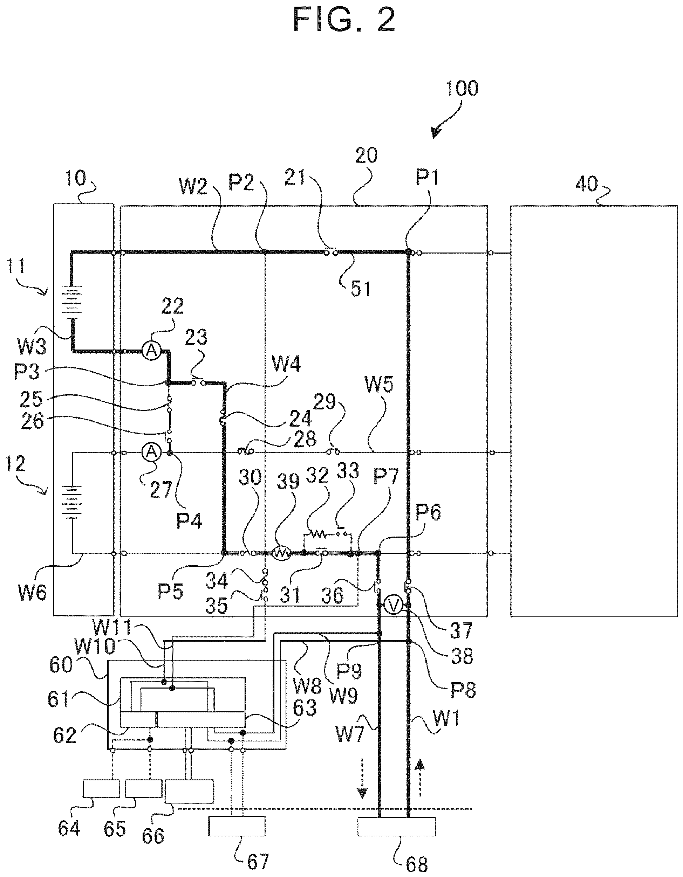

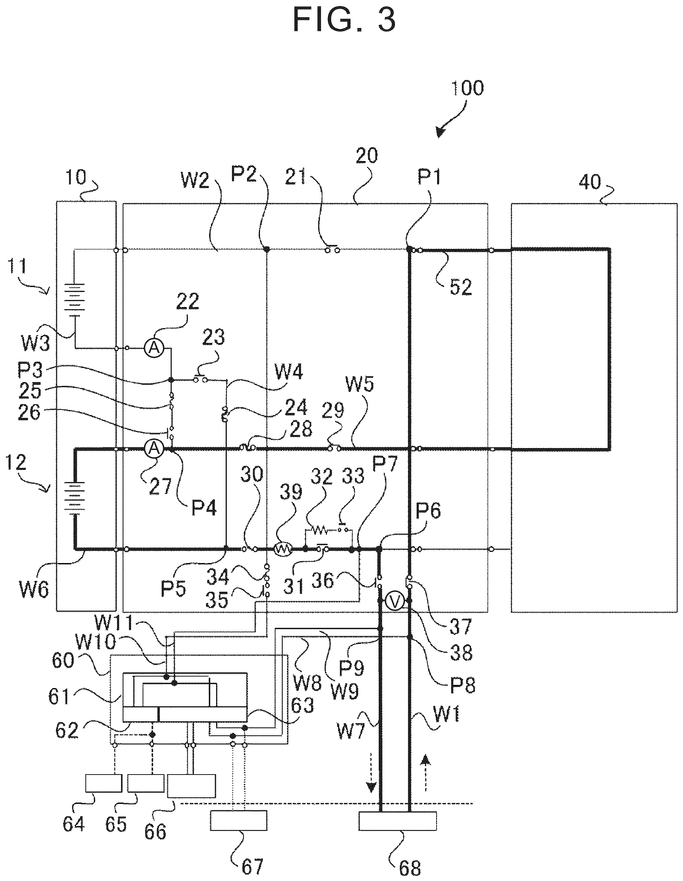

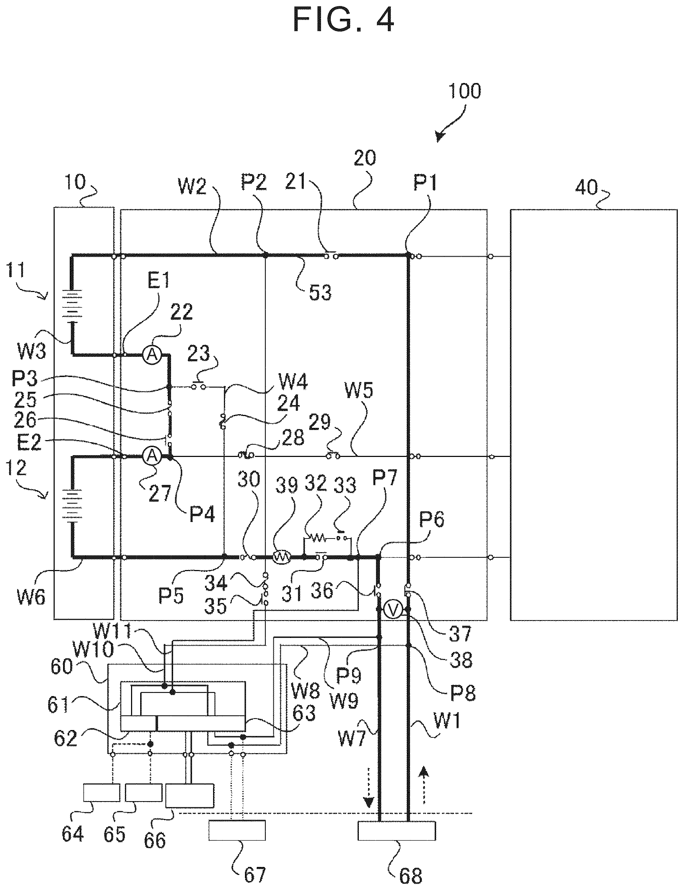

FIGS. 2 to 4 show an example of a circuit configuration of the vehicle battery structure 100 according to the present embodiment. The circuit configurations shown in FIGS. 2 to 4 are the same. FIG. 2 shows a first path 51 (bold line), FIG. 3 shows a second path 52 (bold line), and FIG. 4 shows a third path 53 (bold line). The dotted arrows in FIGS. 2 to 4 indicate the direction of current flow.

As shown in FIGS. 2 to 4, when fast charging is performed using a direct current (DC) inlet 68, the junction block 20 is connected to the DC inlet 68 for fast charging of the first battery 11 and the second battery 12. On the other hand, when normal charging is performed using a 2-in-1 charger 60, the junction block 20 is connected, via the 2-in-1 charger 60, to a solar panel 64 and an auxiliary battery 65 for normal charging of the first battery 11 and the second battery 12. The junction block 20 may be connected, via the 2-in-1 charger 60, to a wiring plug connector 66 (so-called AC 100 V outlet) or an alternating current (AC) inlet 67 for charging of the first battery 11 and the second battery 12. The 2-in-1 charger 60 includes a filter 61, a direct current-to-direct current (DC-DC) converter 62, and an on-board battery charger (OBC) 63. The DC-DC converter 62 is connected to the solar panel 64 and the auxiliary battery 65, and converts a DC voltage supplied from the solar panel 64 and the auxiliary battery 65 into a predetermined DC voltage corresponding to the first battery 11 and the second battery 12. The OBC 63 is connected to the wiring plug connector 66 or the AC inlet 67, and converts an AC voltage supplied from the wiring plug connector 66 or the AC inlet 67 into a predetermined DC voltage corresponding to the first battery 11 and the second battery 12. The DC-DC converter 62 and the OBC 63 are connected to the junction block 20.

The junction block 20 includes a positive-side system main relay 21, a first current sensor 22, a first DC relay 23, a first fuse 24, a DC fuse 25, a second DC relay 26, a second current sensor 27, a second fuse 28, a third DC relay 29, a third fuse 30, a negative-side system main relay 31, a limiting resistor 32, a pre-charge-side system main relay 33, an AC fuse 34, a positive-side system sub-relay 35, a fourth DC relay 36, a fifth DC relay 37, a voltage sensor 38, and a thermistor 39. The thermistor 39 is an example of a temperature sensor, and is a resistor whose electrical resistance varies significantly with temperature changes. The temperature sensor is not limited to the thermistor 39, and may be any sensor capable of detecting temperature changes.

A first end of a wire W1 is connected to the positive side of the DC inlet 68, and a second end of the wire W1 is connected to a wire W2 at a contact point P1. A first end of the wire W2 is connected to the motor 40, and a second end of the wire W2 is connected to the positive side of the first battery 11. A first end of a wire W3 is connected to the negative side of the first battery 11, and a second end of the wire W3 is connected to a wire W5 at a contact point P4. A first end of a wire W4 is connected to the wire W3 at a contact point P3, and a second end of the wire W4 is connected to a wire W6 at a contact point P5. A first end of the wire W5 is connected to the motor 40, and a second end of the wire W5 is connected to the positive side of the second battery 12. A first end of the wire W6 is connected to the negative side of the second battery 12, and a second end of the wire W6 is connected to the motor 40. A first end of a wire W7 is connected to the negative side of the DC inlet 68, and a second end of the wire W7 is connected to the wire W6 at a contact point P6. A first end of a wire W8 is connected to the positive side of the OBC 63, and a second end of the wire W8 is connected to the wire W1 at a contact point P8. A first end of a wire W9 is connected to the negative side of the OBC 63, and a second end of the wire W9 is connected to the wire W7 at a contact point P9. A first end of a wire W10 is connected to the positive side of the DC-DC converter 62 and the positive side of the OBC 63, and a second end of the wire W10 is connected to the wire W2 at a contact point P2. A first end of a wire W11 is connected to the negative side of the DC-DC converter 62 and the negative side of the OBC 63, and a second end of the wire W11 is connected to the wire W6 at a contact point P7.

The junction block 20 according to the present embodiment includes the first path 51 (shown by the bold line in FIG. 2), the second path 52 (shown by the bold line in FIG. 3), and the third path 53 (shown by the bold line in FIG. 4). The first path 51 is a path for charging the first battery 11 from the DC inlet 68, and passes through the wires W1, W2, W3, W4, W6, W7. The second path 52 is a path for charging the second battery 12 from the DC inlet 68, and passes through the wires W1, W2, the motor 40, and the wires W5, W6, W7. The third path 53 is a path for charging the first battery 11 and the second battery 12 from the DC inlet 68, and passes through the wires W1, W2, W3, W5, W6, W7.

The positive-side system main relay 21 is disposed between the contact point P1 on the wire W1 and the contact point P2 on the wire W2, and switches between the first path 51 and the second path 52. The first current sensor 22 is disposed between the negative side of the first battery 11 and the contact point P3 on the wire W3, and measures a current flowing through the first path 51 or the third path 53. The first DC relay 23 is disposed between the contact point P3 on the wire W3 and the first fuse 24 on the wire W4, and switches between the first path 51 and the third path 53. The first fuse 24 is disposed between the first DC relay 23 and the contact point P5 on the wire W4. The DC fuse 25 is disposed between the contact point P3 and the second DC relay 26 on the wire W3. The second DC relay 26 is disposed between the DC fuse 25 and the contact point P4 on the wire W3, and switches between the first path 51 and the third path 53. The second current sensor 27 is disposed between the contact point P4 and the positive side of the second battery 12 on the wire W5, and measures a current flowing through the second path 52 or the third path 53. The second fuse 28 is disposed between the contact point P4 and the third DC relay 29 on the wire W5. The third DC relay 29 is disposed between the second fuse 28 and the motor 40 on the wire W5, and switches between the first path 51 and the second path 52. The third fuse 30 is disposed between the contact point P5 and the negative-side system main relay 31 on the wire W6. The negative-side system main relay 31 is disposed between the third fuse 30 and the contact point P7 on the wire W6, and switches on and off the first path 51, the second path 52, and the third path 53. The limiting resistor 32 and the pre-charge-side system main relay 33 are connected in parallel with the negative-side system main relay 31, and constitute a pre-charge circuit. The AC fuse 34 is disposed between the positive-side system sub-relay 35 and the contact point P2 on the wire W10. The positive-side system sub-relay 35 is disposed between the AC fuse 34 and the positive sides of the DC-DC converter 62 and the OBC 63 on the wire W10, and switches between connection to and disconnection from the 2-in-1 charger 60. The fourth DC relay 36 is disposed between the contact point P9 and the contact point P6 on the wire W7, and switches between connection to and disconnection from the DC inlet 68. The fifth DC relay 37 is disposed between the contact point P1 and the contact point P8 on the wire W1, and switches between connection to and disconnection from the DC inlet 68. The voltage sensor 38 is disposed between the wire W1 and the wire W7, and measures a voltage between the wire W1 and the wire W7. The thermistor 39 is disposed between the third fuse 30 and the negative-side system main relay 31.

As shown in FIGS. 2 to 4, the thermistor 39 according to the present embodiment is provided in a portion where the first path 51, the second path 52, and the third path 53 overlap. More specifically, the thermistor 39 is disposed between the third fuse 30 and the negative-side system main relay 31, as described above. The portion where the first path 51, the second path 52, and the third path 53 overlap is a portion through which a relatively large current flows, and can therefore be regarded as a portion where temperature changes in response to changes in current can be readily detected. When the thermistor 39 detects a rapid temperature change, a relay malfunction is considered to have occurred in one of the first path 51, the second path 52, and the third path 53.

Specifically, it is assumed herein that the first battery 11 and the second battery 12 are connected in parallel. In this case, a current flows through the first path 51 shown in FIG. 2 and the second path 52 shown in FIG. 3, and the first battery 11 and the second battery 12 are charged in parallel. If a relay malfunction occurs during charging, the thermistor 39 can detect a temperature change caused by a short-circuit current. Next, it is assumed herein that the first battery 11 and the second battery 12 are connected in series. In this case, a current flows through the third path 53 shown in FIG. 4, and the first battery 11 and the second battery 12 are charged in series. If a relay malfunction occurs during charging, the thermistor 39 can detect a temperature change caused by a short-circuit current.

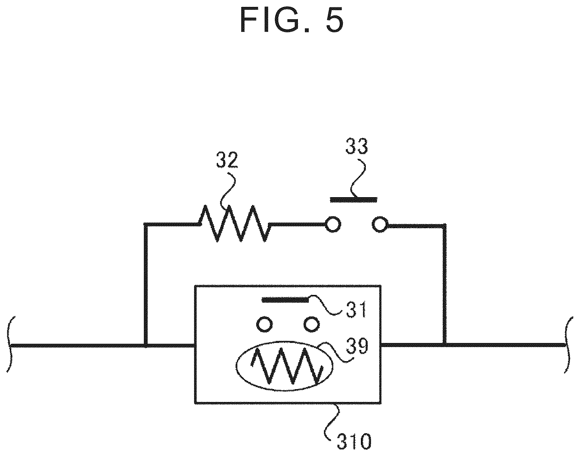

FIG. 5 shows another example of the arrangement of the thermistor 39 according to the present embodiment. As shown in FIG. 5, the thermistor 39 may be provided integrally with the negative-side system main relay 31. In other words, the thermistor 39 and the negative-side system main relay 31 together constitute a single element 310. Providing both the thermistor 39 and the negative-side system main relay 31 in the single element 310 can reduce the installation area and simplify the structure.

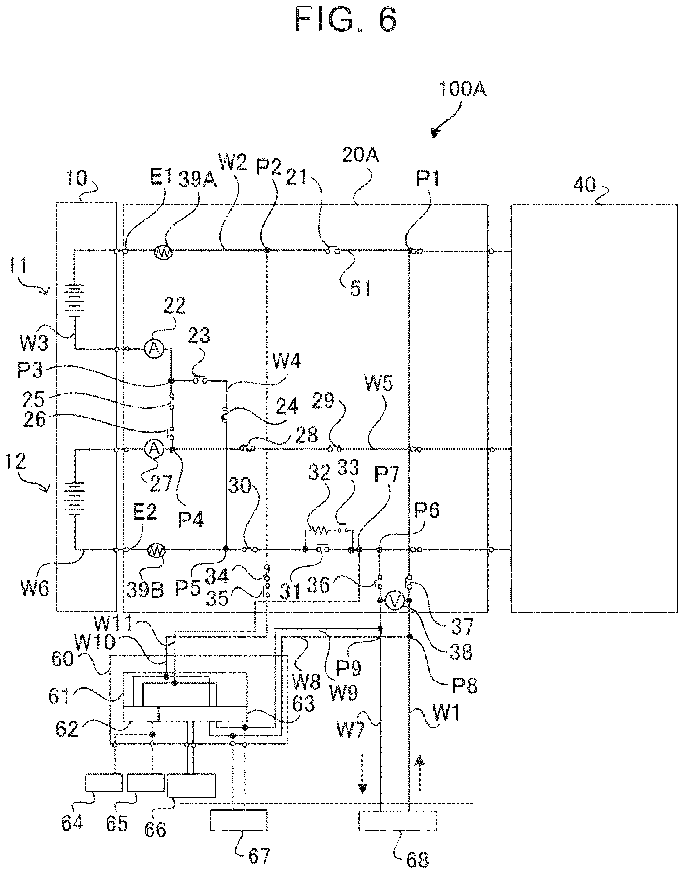

FIG. 6 shows a circuit configuration of a vehicle battery structure 100A according to a modification. For clarity of illustration, the first path 51, the second path 52, and the third path 53 are not shown in FIG. 6. As shown in FIG. 6, the vehicle battery structure 100A according to the modification includes a junction block 20A. In the junction block 20A, two thermistors 39A, 39B are provided instead of the thermistor 39 (see FIGS. 2 to 4). In other words, the thermistor 39A is disposed in a portion where the first path 51 and the third path 53 overlap but do not overlap the second path 52. More specifically, the thermistor 39A is disposed between the contact point P2 on the wire W2 and the positive side of the first battery 11. The portion where the first path 51 and the third path 53 overlap may be, for example, a portion between the contact point P2 and an endpoint E1 of the junction block 20. The endpoint E1 is connected to the positive side of the first battery 11. On the other hand, the thermistor 39B is disposed in a portion where the second path 52 and the third path 53 overlap but do not overlap the first path 51. More specifically, the thermistor 39B is disposed between the negative side of the second battery 12 and the contact point P5 on the wire W6. The portion where the second path 52 and the third path 53 overlap may be, for example, a portion between the contact point P5 and an endpoint E2 of the junction block 20. The endpoint E2 is connected to the negative side of the second battery 12. As shown in the example of FIG. 6, when the thermistor 39A detects a rapid temperature change, a relay malfunction is considered to have occurred in either the first path 51 or the third path 53. When the thermistor 39B detects a rapid temperature change, a relay malfunction is considered to have occurred in either the second path 52 or the third path 53.

Specifically, it is assumed herein that the first battery 11 and the second battery 12 are connected in parallel. In this case, a current flows through the first path 51 shown in FIG. 2 and the second path 52 shown in FIG. 3, and the first battery 11 and the second battery 12 are charged in parallel. If a relay malfunction occurs during charging, the thermistor 39A can detect a temperature change caused by a short-circuit current. Similarly, if a relay malfunction occurs during charging, the thermistor 39B can detect a temperature change caused by a short-circuit current. Next, it is assumed herein that the first battery 11 and the second battery 12 are connected in series. In this case, a current flows through the third path 53 shown in FIG. 4, and the first battery 11 and the second battery 12 are charged in series. If a relay malfunction occurs during charging, the thermistor 39A or the thermistor 39B can detect a temperature change caused by a short-circuit current.

As described above, according to the present embodiment, it is possible to detect a relay malfunction with a minimum number of temperature sensors in a vehicle equipped with a plurality of batteries.

The technical scope of the present disclosure is not limited to the scope described in the above embodiment. Various modifications and improvements may be made to the above embodiment without departing from the spirit and scope of the disclosure, and embodiments with such modifications or improvements are also included in the technical scope of the present disclosure.

## Claims

1. A vehicle connection circuit (20) that is configured to be interposed between a first battery (11) and a second battery (12), both provided in a vehicle and connectable to each other, and a motor (40), and that is configured to electrically connect the first battery (11), the second battery (12), and the motor (40), the vehicle connection circuit comprising:
a first path (51) configured to charge the first battery (11);
a second path (52) configured to charge the second battery (12);
a third path (53) configured to charge the first battery (11) and the second battery (12); and
a temperature sensor (39) provided in a portion where the first path (51), the second path (52), and the third path (53) overlap.

2. The vehicle connection circuit according to claim 1, wherein:
a fuse (30) and a relay (31) are provided in a portion where the first path (51), the second path (52), and the third path (53) overlap; and
the temperature sensor (39) is provided between the fuse (30) and the relay (31).

3. The vehicle connection circuit according to claim 1, wherein:
a fuse (30) and a relay (31) are provided in a portion where the first path (51), the second path (52), and the third path (53) overlap; and
the temperature sensor (39) is provided integrally with the relay (31).

4. The vehicle connection circuit according to claim 1, wherein the temperature sensor (39) is provided in a portion where the first path (51) and the third path (53) overlap and do not overlap the second path (52), and in a portion where the second path (52) and the third path (53) overlap and do not overlap the first path (51), instead of in the portion where the first path (51), the second path (52), and the third path (53) overlap.

5. A vehicle battery structure (100) comprising:
a first battery (11); and
a second battery (12) that is connectable to the first battery; and
the vehicle connection circuit (20) according to any one of claims 1 to 4 that is interposed between the first battery (11) and the second battery (12), and the motor (40), and that is configured to electrically connect the first battery (11), the second battery (12), and the motor (40).
